# FASCICULE DE BREVET EUROPEEN

(11) **EP 2 312 190 B1**
(45) Date de publication et mention de la délivrance du brevet: **27.07.2016**
(21) Numéro de dépôt: 10187038.4
(22) Date de dépôt: 08.10.2010
(51) Int. Cl.: F16L 21/02, B64D 37/26

(54) **Dispositif et procédé de connexion à un embout de tuyauterie vide-vite d'aéronef**
VORRICHTUNG UND VERFAHREN ZUM VERBINDEN AN EIN FLUGZEUG TREIBSTOFF AUSLASS
APPARATUS AND METHOD FOR CONNECTING TO AN AIRCRAFT FUEL DUMPING OUTLET

(30) Priorité: 13.10.2009 FR 0957147
(43) Date de publication de la demande: 20.04.2011
(73) Titulaire: AIRBUS OPERATIONS (S.A.S), 31060 Toulouse (FR)
(72) Inventeur: Mateo, Stéphane, 82170, DIEUPENTALE (FR)
(74) Mandataire: Gicquel, Olivier Yves Gérard

(56) Documents cités:
- GB-A- 454 820

## Description

L'invention relève du domaine des dispositifs de transfert de fluides. Elle concerne plus particulièrement le réseau de conduites de carburant existant sur un aéronef. Encore plus particulièrement, elle concerne un dispositif de connexion à circuit vide-vite d'aéronef.

### Contexte de l'invention et problème posé

Dans des situations d'extrême urgence, par exemple en vue d'un atterrissage sur le ventre, il peut être nécessaire à un aéronef de se poser avec ses réservoirs de carburant aussi vides que possible, et donc de vider ses réservoirs en vol. Les aéronefs sont équipés à cet effet d'un dispositif dit vide-vite ("Jettison" en langue anglaise), qui permet un vidage des réservoirs en quelques minutes. Un tel dispositif est par exemple décrit dans le document GB454,820.

De manière connue, un dispositif vide-vite comprend des vannes disposées à l'extrémité arrière des ailes, et, typiquement de chaque côté de l'avion, sur le carénage d'une des glissières assurant le déploiement correct des volets.

Dans le cadre de la procédure de certification d'un nouvel avion, le dispositif vide-vite doit être testé, au même titre que les autres composants et systèmes de l'avion. Le but de l'essai est alors de s'assurer du montage correct et de la non obstruction du circuit vide-vite, en vérifiant notamment le débit de carburant évacué lors du fonctionnement du système vide-vite. L'essai sert également à vérifier l'étanchéité des tuyauteries de vide-vite montées dans le carénage des glissières.

Il est clair que, lorsqu'il s'agit d'un appareil commercial de grande capacité, la masse de carburant qui doit être évacuée par le circuit vide-vite dépasse la dizaine de tonnes en quelques minutes. La mise en place d'un moyen de récupération du carburant pompé vers l'extérieur est donc indispensable.

Le test de vide-vite présente cependant des risques évidents d'incendie, ou de déversement de carburant sur le sol au voisinage de l'avion, susceptible de créer une zone d'atmosphère potentiellement explosive. L'existence de telles zones est régie par une directive européenne ATX, qui définit les exigences de construction pour éviter les sources d'inflammation telles que friction ou échauffement.

### Objectifs de l'invention

La présente invention a donc pour objet de proposer un dispositif répondant au problème exposé ci-dessus. Un second but de l'invention est d'être simple et peu onéreuse à mettre en oeuvre.

### Exposé de l'invention

A cet effet, l'invention vise un dispositif de connexion à un embout de vidage de tuyauterie vide-vite d'aéronef, ledit embout de vidage comportant un tube sensiblement cylindrique, et une pièce rigide formant interface entre le tube cylindrique et la structure de l'aéronef, le dispositif de connexion comportant :
- un adaptateur destinée à venir s'assembler autour de la pièce rigide,
- un tuyau d'évacuation, présentant en une première extrémité un diamètre interne supérieur au diamètre externe du tube cylindrique, ledit tuyau comportant en cette première extrémité un collier portant des moyens de fixation réversible sur l'adaptateur, et dans sa partie intérieure des moyens d'assurer une étanchéité autour du tube cylindrique.

On comprend que le dispositif selon l'invention se compose de deux éléments disjoints, assemblés au moment de leur utilisation.

En effet, la fonction première de l'outil est de collecter du carburant tout en ayant l'assurance :
- d'avoir une étanchéité correcte pour éviter tout risque de déversement accidentel de carburant
- de ne pas perturber la performance avion (débit).

Il s'agit donc de réaliser cette étanchéité, au niveau d'un assemblage de pièces, dont l'une, le tube cylindrique, est éventuellement souple. Il s'y ajoute de par la conception et l'environnement d'utilisation du dispositif, que sa fixation dans sa zone d'utilisation sur avion est difficile.

Préférentiellement, la pièce d'interface comporte :
- une coquille rigide en plusieurs éléments, dont la partie intérieure comporte des joints d'appui sur la pièce rigide,
- des moyens de solidarisation entre elles des éléments formant la coquille rigide.

Dans ce cas, par simplicité de réalisation, la coquille rigide est préférentiellement composée de deux demi-coquilles principalement symétriques.

Selon un mode particulier de réalisation du dispositif, les moyens d'assurer l'étanchéité autour du tube cylindrique comprennent au moins une bague tronconique de diamètre interne sensiblement égal au diamètre externe du tube cylindrique, ladite bague tronconique portant un joint annulaire.

Préférentiellement dans ce cas, la ou les bagues tronconiques sont réalisées de façon monobloc avec le collier d'extrémité du tuyau d'évacuation.

Selon une mise en oeuvre avantageuse, le tuyau d'évacuation comporte deux bagues tronconiques, disposés dos à dos.

L'invention vise en second lieu un embout de vidage de tuyauterie vide-vite d'aéronef, comportant un tube souple sensiblement cylindrique, et une pièce rigide formant interface entre le tube cylindrique et la structure de l'aéronef, ladite pièce rigide présentant un diamètre généralement croissant de la structure de l'aéronef vers le tube cylindrique.

L'invention vise encore un procédé de connexion de tuyauterie d'évacuation de carburant à un embout de vidage de tuyauterie vide-vite d'aéronef, pour dispositif tel qu'exposé, le procédé comportant des étapes de :
- positionnement de l'adaptateur autour de la pièce rigide de l'embout de vidage,
- fixation de l'adaptateur autour de la pièce rigide,
- positionnement du segment de tuyauterie dans l'axe du tube cylindrique,
- engagement du tube dans le segment de tuyauterie, et fixation du segment de tuyauterie sur l'adaptateur,
- fixation du moyen de connexion à un moyen de réception de carburant.

On comprend que la séparation de l'assemblage en deux parties facilite les opérations.

### Brève description des figures

Les buts et avantages de l'invention seront mieux compris à la lecture de la description et des dessins d'un mode particulier de réalisation, donné à titre d'exemple non limitatif, et pour lequel les dessins représentent :
- figure 1 : une vue schématique de la disposition de l'embout de tuyauterie vide-vite sur un avion commercial;
- figure 2 : une vue de détail de ce même embout;
- figures 3a et 3b : une vue en perspective d'un dispositif de connexion selon l'invention, dans un mode particulier de réalisation, et une vue de détail de la vue précédente;
- figure 4 : une vue en coupe de l'extrémité de ce dispositif de connexion, une fois assemblé autour de l'embout de tuyauterie de vide-vite;
- figure 5 : une vue en perspective du dispositif de connexion complet.

### Description détaillée d'un mode de réalisation de l'invention

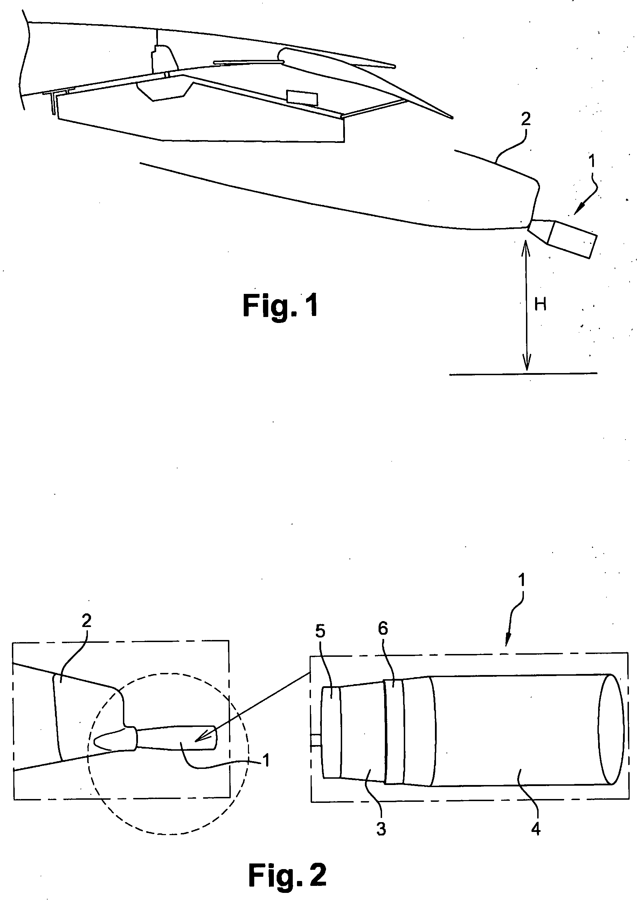

Un avion commercial de type classique comporte usuellement deux embouts de vidage 1 de tuyauterie vide-vite, disposés chacun, comme on le voit sur la figure 1, à l'arrière d'un carénage de glissière de volets 2, à raison d'un embout de vidage 1 par demi-voilure de l'avion. A titre informatif, lorsque l'avion est au sol, la hauteur H entre le sol et l'embout de vidage 1 est de plusieurs mètres, et par exemple de plus de quatre mètres sur les avions de grande capacité. Cette hauteur complique naturellement la manipulation d'outillages au voisinage d'un embout de vidage 1 de vide-vite.

Ainsi qu'on le voit alors plus précisément sur la figure 2, un embout de vidage 1 comporte deux parties principales. Elle comporte en premier lieu une pièce rigide 3 solidarisée à la structure de l'aéronef, et disposée à l'extrémité d'une tuyauterie de vide-vite, non représentée sur la figure, et interne à l'avion. Cette pièce rigide 3 est classiquement réalisée en matériau métallique. Elle est, dans le présent exemple nullement limitatif, de forme principalement tronconique, s'évasant lorsqu'on s'éloigne de la glissière 2, à la manière d'une tuyère. La pièce rigide 3 comporte ici deux colliers sensiblement cylindriques, disposés, pour le premier collier 5, au voisinage immédiat de la glissière de volets 2, et pour le second collier 6, approximativement dans la moitié arrière de la pièce rigide 3.

La pièce rigide 3 se prolonge par un tube souple 4, de forme cylindrique. Son rôle est de canaliser le carburant éjecté des réservoirs de manière à en faire un jet monodirectionnel autant que possible, et à éviter ainsi la formation d'un brouillard hautement inflammable juste derrière l'avion. Sa souplesse permet d'atténuer en partie les turbulences du flux de carburant en sortie de la tuyauterie vide-vite.

Le tube cylindrique souple 4 est par exemple réalisé en caoutchouc ou autre élastomère.

A titre d'exemple de dimensionnement, le tube cylindrique souple 4 présente un diamètre D de l'ordre de dix centimètres, pour une épaisseur de matériau élastomère de cinq millimètres environ, et une longueur de vingt centimètres environ. On comprend, au vu de son épaisseur, que le tube cylindrique souple 4 conserve sa forme cylindrique lorsqu'il est soumis à la seule gravité.

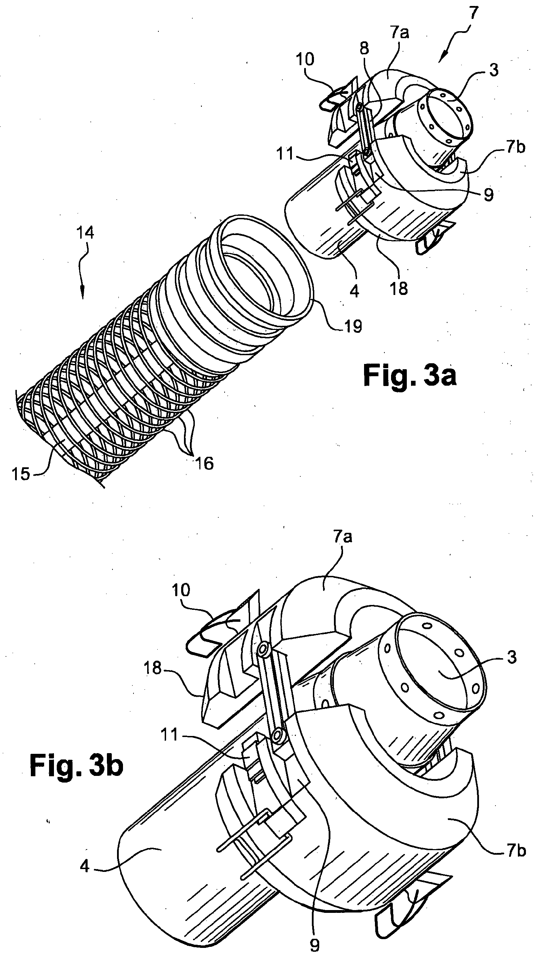

La figure 3a illustre alors un dispositif de connexion adapté à être utilisé en conjonction avec un embout de vidage 1 de tuyauterie vide-vite tel que décrit précédemment.

Ainsi qu'il apparait sur la figure, le dispositif de connexion comprend deux éléments distincts. Il comprend tout d'abord un adaptateur mécanique 7 destiné à venir se fixer sur la pièce rigide 3, et à transmettre si nécessaire, par son intermédiaire, des efforts mécaniques à la structure de l'avion.

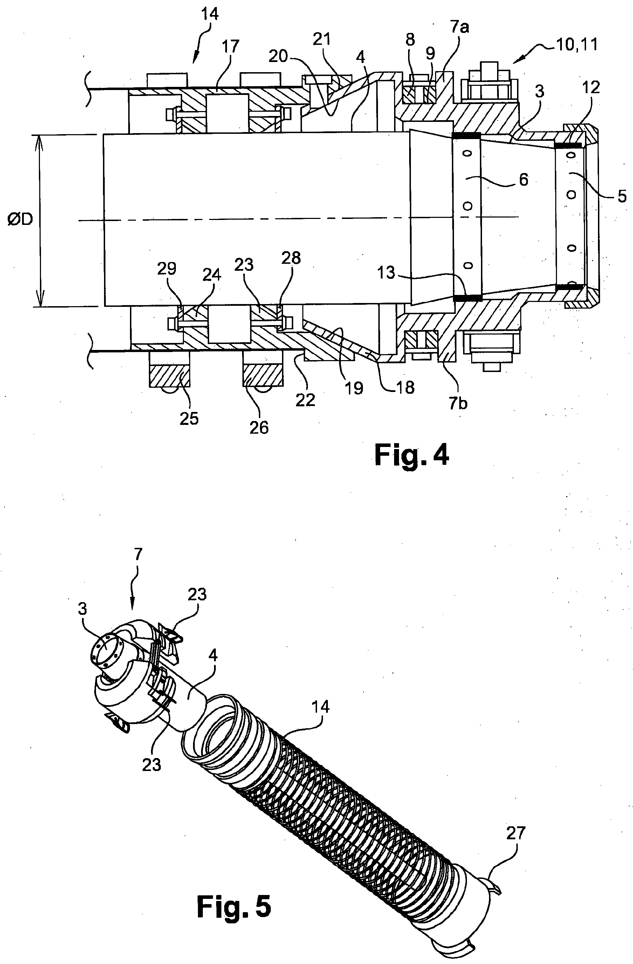

Cet adaptateur 7, se compose de deux demi-coquilles 7a, 7b qui viennent se refermer autour de la pièce rigide 3 en prenant appui sur les deux colliers 5, 6 (voir figure 3b et figure 4), par l'intermédiaire de joints souples 12, 13, par exemple réalisés en élastomère et d'une épaisseur de quelques millimètres.

Dans l'exemple donné ici à titre nullement limitatif, les deux demi-coquilles 7a, 7b présentent une surface interne formée d'une succession de zones cylindriques, dimensionnées pour suivre l'évolution du diamètre de la pièce rigide 3 de l'embout de vidage 1. Les deux demi-coquilles 7a, 7b sont ici réalisées en métal, par un procédé connu de l'homme de l'art. De manière à permettre un positionnement précis des demi-coquilles 7a, 7b face à face, chacune d'entre elles porte un ergot 8 destiné à venir coopérer avec une glissière 9 ménagée à la surface de l'autre demi-coquille.

Chaque demi-coquille 7a, 7b comporte également un moyen de verrouillage 10 coopérant avec une fixation 11 disposée en vis-à-vis sur la demi-coquille opposée. Le moyen de verrouillage 10 peut par exemple être constitué d'un crochet métallique du type apte à produire une force de rappel entre les deux demi-coquilles, de façon à les maintenir plaquées l'une contre l'autre, et à garantir une absence de jeu mécanique entre l'adaptateur 7 et la pièce rigide 3.

L'adaptateur 7 présente, lorsque les deux demi-coquilles 7a, 7b sont assemblées, une surface tronconique 18 en sa partie arrière, c'est à dire la plus éloignée de la glissière 2.

A titre d'ordre de grandeur purement informatif, avec un embout de vidage 1 tel qu'évoqué plus haut, l'adaptateur 7 présente un diamètre externe d'environ vingt centimètres pour une longueur d'environ vingt cinq centimètres, et un poids de quelques kilos.

Le dispositif de connexion comporte ensuite un second élément, en la forme d'un segment de tuyauterie 14 (voir figures 3a et 5).

Ce segment de tuyauterie 14 a pour fonction de canaliser le carburant issu de l'embout de vidage 1 vers un dispositif de stockage (non représenté), tel que par exemple une citerne, sans générer de pertes de charge sur le débit de sortie de l'embout de vidage 1. Le segment de tuyauterie 14 est donc d'un diamètre sensiblement supérieur à celui du tube cylindrique souple 4, et, dans le présent exemple, d'environ vingt centimètres.

Le segment de tuyauterie 14 est de type tube annelé souple, comportant une membrane mince 15 renforcée par des anneaux rigides 16. La membrane est par exemple réalisée en matière plastique, et les anneaux en métal. Les matériaux composant ce type de tube sont connus de l'homme de l'art et ne sont donc pas détaillés plus avant ici. On comprend que par ce montage, la ligne axiale du segment de tuyauterie 14 est très facilement déformable sans entraîner de pliage du tube.

Le segment de tuyauterie 14 comporte à une première extrémité un manchon rigide 17, destiné à venir se fixer sur l'adaptateur 7, et à assurer l'étanchéité de la connexion autour du tube cylindrique souple 4.

Ce manchon rigide 17, dont la section est mieux visible sur la figure 4, comporte sur sa face interne un premier segment 19 tronconique, de forme complémentaire à une partie de la surface tronconique arrière 18 de l'adaptateur 7. Le segment tronconique19 du segment de tuyauterie 14 vient ainsi verrouiller ensemble les deux demi-coquilles 7a, 7b.

Un ergot 20 disposé sur ce premier segment 19 vient coopérer avec un orifice 21 ménagé sur la surface tronconique 18 de l'adaptateur 7, de manière à garantir une orientation angulaire prédéterminée du segment de tuyauterie 14 vis-à-vis de l'adaptateur 7.

Le manchon 17 présente une face externe sensiblement cylindrique présentant en partie avant un bourrelet également cylindrique déterminant un anneau 22 perpendiculaire à l'axe principal du segment de tuyauterie 14. Cet anneau 22 permet d'assurer la prise de crochets métalliques souples fixés sur l'adaptateur 7. Ceux-ci permettent alors d'attacher temporairement le segment de tuyauterie 14 à l'adaptateur 7, lors de l'utilisation du dispositif de connexion.

Le manchon 17 comporte ensuite sur sa face interne des moyens d'assurer l'étanchéité autour du tube cylindrique souple 4. Ceux-ci se composent dans le présent exemple de deux bagues tronconiques 23, 24, disposés dos à dos, de diamètre interne sensiblement égal au diamètre externe du tube cylindrique souple 4, portant des joints annulaires 28, 29. Les bagues tronconiques 23, 24 sont ici réalisés de façon monobloc avec le manchon 17 du segment de tuyauterie 14. Les joints annulaires 28, 29 sont par exemple réalisés en élastomère de type connu en soi.

Sensiblement au droit de ces bagues tronconiques 23, 24, le manchon 17 comporte sur sa face externe deux joints de serrage 25, 26, de type connu en soi, permettant d'appliquer au tube annelé une force de serrage sur le manchon 17, et donc d'assurer une étanchéité du dispositif de connexion lors du passage du carburant.

Le segment de tuyauterie 14 comporte en sa seconde extrémité un moyen de connexion 27 de type classique à d'autres tuyauteries de carburant ou à une citerne à carburant, fixe ou mobile.

A titre d'ordre de grandeur purement informatif, avec un embout de vidage 1 tel qu'évoqué plus haut, le segment de tuyauterie 14 présente un diamètre externe d'environ vingt centimètres pour une longueur d'environ un mètre, et un poids de quelques kilos.

### Mode de fonctionnement

L'utilisation du dispositif de connexion tel qu'exposé comporte les étapes suivantes :
- positionnement des deux demi-coquilles 7a, 7b formant l'adaptateur 7, autour de la pièce rigide 3 de l'embout de vidage 1,
- insertion des ergots 8 dans les glissières 9 correspondantes pour assurer le positionnement face à face des deux demi-coquilles 7a, 7b,
- serrage des deux demi-coquilles 7a, 7b, et fixation par l'intermédiaire des crochets métalliques 10,
- positionnement du segment de tuyauterie 14 dans l'axe du tube cylindrique souple 4,
- engagement du tube souple 4 dans le segment de tuyauterie 14, et fixation dudit segment de tuyauterie 14 sur l'adaptateur 7 par placement des extrémités des crochets souples 23 de l'adaptateur 7 sur l'anneau 22,
- fixation du moyen de connexion 27 à une citerne de stockage de carburant.

Dès lors, le dispositif de connexion est opérationnel et un test de fonctionnement de vide-vite peut être réalisé.

### Avantages de l'invention

On comprend que le dispositif, tel qu'il vient d'être exposé, présente plusieurs avantages :
- il est robuste,
- il est relativement léger, et séparant le poids en deux parties, permettant une fixation aisée de la pièce d'interface autour de la pièce rigide,
- il est peu onéreux de par le choix des matériaux composant les éléments, et simple de maintenance,
- il est facile à connecter,
- il présente une excellente étanchéité,
- il est conforme à la directive européenne ATX (atmosphère explosive).

Ceci s'oppose à d'autres solutions utilisant par exemple un ensemble d'un seul tenant, se fixant par pincement sur la tuyauterie de sortie vide-vite de l'avion. De telles solutions sont nettement plus difficiles à mettre en place, étant formées d'un seul tenant qui doit être porté lors de la fixation autour de l'embout de vide-vite, et dont la masse du tuyau gène alors la bonne fixation par pincement sur l'embout. On rappelle que la fixation s'effectue à plusieurs mètres au dessus du sol, ce qui complique la manipulation et les opérations de montage et de démontage. De même, ces solutions d'un seul tenant sont par voie de conséquence plus facilement endommagées, et donc plus couteuses en maintenance.

Le choix d'une solution en deux éléments permet de séparer les questions de fixation mécanique sur l'embout avion, d'une part, et d'étanchéité, d'autre part.

## Revendications

1. Système vide-vite pour aéronef, le système comportant:
- un embout de vidage (1) de tuyauterie vide-vite d'aéronef, comportant un tube souple sensiblement cylindrique (4), et une pièce rigide (3) adaptée à former interface entre le tube cylindrique et la structure de l'aeronef, le système étant **caractérisé en ce que** ladite pièce rigide présente un diamètre généralement croissant de la structure de l'aéronef vers le tube cylindrique, et **en ce que** le système comporte:
- un dispositif de connexion à l'embout de vidage (1) de tuyauterie vide-vitre d'aéronef, comportant :
a) un adaptateur (7) destiné à venir s'assembler autour de la pièce rigide (3),
b) un tuyau d'évacuation (14), présentant en une première extrémité un diamètre interne supérieur au diamètre externe du tube cylindrique, ledit tuyau comportant en cette première extrémité un manchon (17) portant des moyens de fixation réversible sur l'adaptateur (7), et, dans la partie intérieure de ladite première extrémité, des moyens (23, 24, 28, 29) d'assurer une étanchéité autour du tube cylindrique (4).

2. Système selon la revendication 1, **caractérisé en ce que** l'adaptateur (7) comporte :
- une coquille rigide en plusieurs éléments (7a, 7b), dont la partie intérieure comporte des joints d'appui sur la pièce rigide (3),
- des moyens de solidarisation (8, 9, 10, 11) entre eux des éléments (7a, 7b) formant la coquille rigide.

3. Système selon la revendication 2, **caractérisé en ce que** la coquille rigide est composée de deux demi-coquilles (7a, 7b) principalement symétriques.

4. Système selon l'une quelconque des revendications 2 à 3, **caractérisé en ce que** les moyens d'assurer l'étanchéité autour du tube cylindrique comprennent au moins une bague tronconique (23) de diamètre interne sensiblement égal au diamètre externe du tube cylindrique (4), ladite bague tronconique (23) portant un joint annulaire (28).

5. Système selon la revendication 4, **caractérisé en ce que** les bagues tronconiques (23, 24) sont réalisés de façon monobloc avec le manchon (17) d'extrémité du tuyau d'évacuation (14).

6. Système selon l'une quelconque des revendications 4 à 5, **caractérisé en ce que** le tuyau d'évacuation (14) comporte deux bagues tronconiques (23, 24), disposées dos à dos.

7. Procédé de connexion de tuyauterie d'évacuation de carburant à un embout de vidage (1) de tuyauterie vide-vite d'aéronef, pour système selon l'une quelconque des revendications 1 à 6,
**caractérisé en ce qu'**il comporte des étapes de :
- positionnement de l'adaptateur (7) autour de la pièce rigide (3) de l'embout de vidage (1),
- fixation de l'adaptateur (7) autour de la pièce rigide (3),
- positionnement du segment de tuyauterie (14) dans l'axe du tube cylindrique (4),
- engagement du tube (4) dans le segment de tuyauterie (14), et fixation du segment de tuyauterie (14) sur l'adaptateur (7),
- fixation d'un moyen de connexion (27) du dispositif à un moyen de réception de carburant.

## Patentansprüche

1. Schnellablasssystem für ein Luftfahrzeug, wobei das System aufweist:
- einen Ablassstutzen (1) einer Schnellablass-Rohrleitung eines Luftfahrzeugs, der eine im Wesentlichen zylindrische biegsame Röhre (4) und ein steifes Bauteil (3) aufweist, das geeignet ist, eine Verbindungsfläche zwischen der zylindrischen Röhre und der Struktur des Luftfahrzeugs zu formen,
wobei das System **dadurch gekennzeichnet ist, dass** das steife Bauteil einen von der Struktur des Luftfahrzeugs zur zylindrischen Röhre allgemein zunehmenden Durchmesser aufweist, und dass das System aufweist:
- eine Verbindungsvorrichtung mit dem Ablassstutzen (1) der Schnellablass-Rohrleitung des Luftfahrzeugs, die aufweist:
a) einen Adapter (7), der dazu bestimmt ist, um das steife Bauteil (3) herum eingebaut zu werden,
b)ein Abflussrohr (14), das an einem ersten Ende einen Innendurchmesser größer als der Außendurchmesser der zylindrischen Röhre aufweist, wobei das Rohr an diesem ersten Ende eine Muffe (17), die Einrichtungen zur umkehrbaren Befestigung am Adapter (7) trägt, und im Innenbereich des ersten Endes Einrichtungen (23, 24, 28, 29) zur Gewährleistung einer Dichtheit um die zylindrische Röhre (4) herum aufweist.

2. System nach Anspruch 1, **dadurch gekennzeichnet, dass** der Adapter (7) aufweist:
- eine steife Schale aus mehreren Elementen (7a, 7b), deren Innenbereich Auflagedichtungen auf dem steifen Bauteil (3) aufweist,
- Einrichtungen zur festen Verbindung (8, 9, 10, 11) der die steife Schale formenden Elemente (7a, 7b) untereinander.

3. System nach Anspruch 2, **dadurch gekennzeichnet, dass** die steife Schale aus zwei hauptsächlich symmetrischen Halbschalen (7a, 7b) besteht.

4. System nach einem der Ansprüche 2 bis 3, **dadurch gekennzeichnet, dass** die Einrichtungen zur Gewährleistung der Dichtheit um die zylindrische Röhre herum mindestens einen kegelstumpfförmigen Ring (23) mit einem Innendurchmesser im Wesentlichen gleich dem Außendurchmesser der zylindrischen Röhre (4) enthalten, wobei der kegelstumpfförmige Ring (23) eine Ringdichtung (28) trägt.

5. System nach Anspruch 4, **dadurch gekennzeichnet, dass** die kegelstumpfförmigen Ringe (23, 24) einstückig mit der Endmuffe (17) des Abflussrohrs (14) hergestellt sind.

6. System nach einem der Ansprüche 4 bis 5, **dadurch gekennzeichnet, dass** das Abflussrohr (14) zwei Rücken an Rücken angeordnete kegelstumpfförmige Ringe (23, 24) aufweist.

7. Verfahren zur Verbindung einer Treibstoff-Abflussrohrleitung mit einem Ablassstutzen (1) einer Schnellablass-Rohrleitung eines Luftfahrzeugs für ein System nach einem der Ansprüche 1 bis 6,
**dadurch gekennzeichnet, dass** es die folgenden Schritte aufweist:
- Positionieren des Adapters (7) um das steife Bauteil (3) des Ablassstutzens (1) herum,
- Befestigung des Adapters (7) um das steife Bauteil (3) herum,
- Positionieren des Rohrleitungssegments (14) in der Achse der zylindrischen Röhre (4),
- Einführen der Röhre (4) in das Rohrleitungssegment (14) und Befestigung des Rohrleitungssegments (14) am Adapter (7),
- Befestigung einer Verbindungseinrichtung (27) der Vorrichtung an einer Treibstoff-Aufnahmeeinrichtung.

## Claims

1. Aircraft fuel dumping system, the system comprising:
- an emptying nozzle (1) for aircraft fuel dumping piping, comprising an essentially cylindrical flexible tube (4), and a rigid part (3) designed to form an interface between the cylindrical tube and the structure of the aircraft, the system being **characterized in that** said rigid part has a diameter that generally increases from the structure of the aircraft towards the cylindrical tube, and **in that** the system comprises:
- a device for connecting to the emptying nozzle (1) for aircraft fuel dumping piping, comprising:
a) an adapter (7) designed to fit around the rigid part (3),
b) an evacuation pipe (14) having at a first end an internal diameter that is greater than the external diameter of the cylindrical tube, said pipe comprising at this first end a sleeve (17) bearing means for reversible attachment on the adapter (7), and, in the internal portion of said first end, means (23, 24, 28, 29) for sealing around the cylindrical tube (4).

2. System according to Claim 1, **characterized in that** the adapter (7) comprises:
- a rigid shell made up of multiple elements (7a, 7b), of which the internal portion comprises seals for bearing against the rigid part (3),
- means (8, 9, 10, 11) for securing to one another the elements (7a, 7b) forming the rigid shell.

3. System according to Claim 2, **characterized in that** the rigid shell is composed of two half-shells (7a, 7b) which are principally symmetric.

4. System according to either one of Claims 2 and 3, **characterized in that** the means for sealing around the cylindrical tube comprise at least one frustoconical ring (23) of which the internal diameter is essentially equal to the external diameter of the cylindrical tube (4), said frustoconical ring (23) bearing an annular seal (28).

5. System according to Claim 4, **characterized in that** the frustoconical rings (23, 24) are made in one piece with the end sleeve (17) of the evacuation pipe (14).

6. System according to either one of Claims 4 and 5, **characterized in that** the evacuation pipe (14) comprises two frustoconical rings (23, 24) arranged back-to-back.

7. Method for connecting fuel evacuation piping to an emptying nozzle (1) for aircraft fuel dumping piping, for a system according to any one of Claims 1 to 6,
**characterized in that** it comprises steps of:
- positioning the adapter (7) around the rigid part (3) of the emptying nozzle (1),
- attaching the adapter (7) around the rigid part (3),
- positioning the segment of piping (14) in line with the cylindrical tube (4),
- engaging the tube (4) in the segment of piping (14), and attaching the segment of piping (14) on the adapter (7),
- attaching a connection means (27) of the device to a fuel-receiving means.
